# EUROPEAN PATENT APPLICATION

(11) **EP 4 621 756 A1**
(43) Date of publication of application: **24.09.2025**
(21) Application number: 25164792.1
(22) Date of filing: 19.03.2025
(51) Int. Cl.: G09B 7/02

(54) **INFORMATION PROCESSING APPARATUS, DISPLAY CONTROL METHOD, SYSTEM, AND PROGRAM**

(30) Priority: 22.03.2024 JP 2024046795
(71) Applicant: CASIO COMPUTER CO., LTD., Tokyo 151-8543 (JP)
(72) Inventor: Saito, Takuya, Hamura-shi, Tokyo, 205-8555 (JP)
(74) Representative: Grünecker Patent- und Rechtsanwälte PartG mbB

(57) **Abstract**

An information processing apparatus (2) includes a processor. The processor does not output data for displaying predetermined content in response to detecting a request for displaying the predetermined content and in response to satisfying a first condition that a problem generated from the predetermined content is displayed on a display unit (303) or a second condition that an answer to the problem generated from the predetermined content is not received.

## Description

### CROSS-REFERENCE TO RELATED APPLICATIONS

This application claims the priority and benefit of Japanese Patent Application No. 2024-046795 filed on March 22, 2024. The entire specification, claims, and drawings of Japanese Patent Application No. 2024-046795 are incorporated herein by reference.

### BACKGROUND

### Technical Field

The present disclosure relates to an information processing apparatus, a display control method, a system, and a program.

### Related Art

In some learning support systems using information processing apparatuses such as personal computers, the display unit can also display correct answers to problems displayed on display units in response to manipulations of learners. Of such types of learning support system, there is a learning support system that prohibits display of a correct answer when a question and an answer input field are displayed on a display unit and an answer input from an input unit is accepted (for example, see JP 2-157785 A).

### SUMMARY

In online learning support systems that have become more common in recent years, for example, there is a case where a hint or a correct answer to a solution to a problem displayed on a certain browser can be displayed by another browser by starting a plurality of browsers and executing duplicate login. Therefore, when an answer to a problem is input, there is concern of a fraud act being easily executable, such as a case where a correct answer can be referred to by accessing content including the problem.

The present disclosure has been made in view of such a problem, and an object of the present disclosure is to make it difficult to execute a fraud act when an answer is input.

According to an aspect of the present disclosure, an information processing apparatus includes a control unit configured to execute control such that predetermined content is not displayed on a display unit when the predetermined electronic label is displayed and a request for displaying the predetermined content is detected. The predetermined electronic label functions as a manipulation button for displaying a screen for inputting an answer to a problem on the display unit when a problem generated from the predetermined content is displayed and the electronic label is manipulated.

According to the above aspect, it is possible to make it difficult to execute a fraud act when an answer is input.

### BRIEF DESCRIPTION OF THE DRAWINGS

FIG. 1 is a diagram illustrating a configuration example of a learning system according to an embodiment;
FIG. 2 is a block diagram illustrating a functional configuration example of a user terminal;
FIG. 3A is a block diagram illustrating an example of user data;
FIG. 3B is a diagram illustrating an example of a problem label display situation;
FIG. 4 is a flowchart illustrating an example of processing during problem label distribution;
FIG. 5 is a sequence diagram illustrating an example of processing for producing an answer sheet to a distributed problem;
FIG. 6 is a sequence diagram illustrating an example of processing executed when problem content is displayed on a user terminal used by a learner;
FIGS. 7A to 7C are diagrams illustrating examples of display screens during problem label distribution;
FIGS. 8A to 8C are diagrams illustrating examples of display screens when answer sheets are produced and submitted;
FIG. 9 is a diagram illustrating an example of a display screen when duplicate login is executed; and
FIG. 10 is a diagram illustrating an example of a display screen for restricting browsing of workbook content.

### DETAILED DESCRIPTION

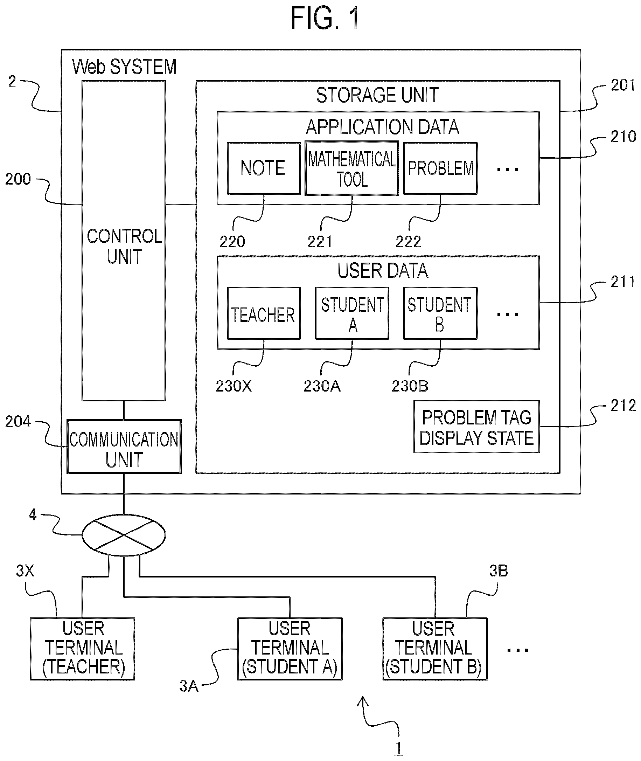

Hereinafter, embodiments of the present disclosure will be described with reference to the drawings. Letters suffixed to the illustrated reference numerals are intended to identify a plurality of components to which the numbers are assigned. In the following description of the present specification, letters suffixed to numbers will be written only when specific components among a plurality of components to which the same numeral is assigned are subjects. For example, when a "user terminal 3" is referred to, the user terminal may be any of three user terminals 3A, 3B, and 3X in FIG. 1 and other user terminals (not illustrated). When the "user terminal 3A" is described, the user terminal refers only to the user terminal to which reference numeral 3A is allocated in FIG. 1.

A learning system 1 illustrated in FIG. 1 includes a web system 2 and user terminals 3. The number of user terminals 3 is not limited to three. Users of the user terminals 3 include a user who learns using the learning system 1 (learner) such as a child, a pupil, or a student, and a user who supports learning (supporter) such as a teacher. Each of the web system 2 and the user terminal 3 can be connected to a communication network 4 in a wireless or wired manner. The user terminals 3 can communicate with the web system 2 via the communication network 4.

The web system 2 is a system that provides various functions related to learning of a user using the communication network 4, and includes a control unit 200, a storage unit 201, and a communication unit 204 as exemplified in FIG. 1. The web system 2 may include other functional blocks (not illustrated) such as an input unit and a display unit. The web system 2 may include a single server or a plurality of servers. For example, the web system 2 can include a web server, an application server, and a database server. The term "server" in the present specification may be replaced with an "information processing apparatus" or a "computer" may be used.

The control unit 200 controls an operation of the web system **2.** For example, the control unit 200 executes processing in response to an HTTP request from the user terminal 3, generates a screen according to a result of the processing, and transmits the screen to the user terminal **3.** The processing in response to the HTTP request includes a processing for generating an electronic label in question (hereinafter referred to as "problem label"), processing for distributing the generated problem label, processing for inputting an answer to the problem of the problem label, processing for submitting the input answer, and processing for displaying the workbook content. In the present specification, "inputting an answer" and similar descriptions can be read as "producing an answer sheet" and similar descriptions. A function of the control unit 200 is provided by one or a plurality of processors executing an OS program and various programs related to provision of a note function and the like. The processor may include a CPU.

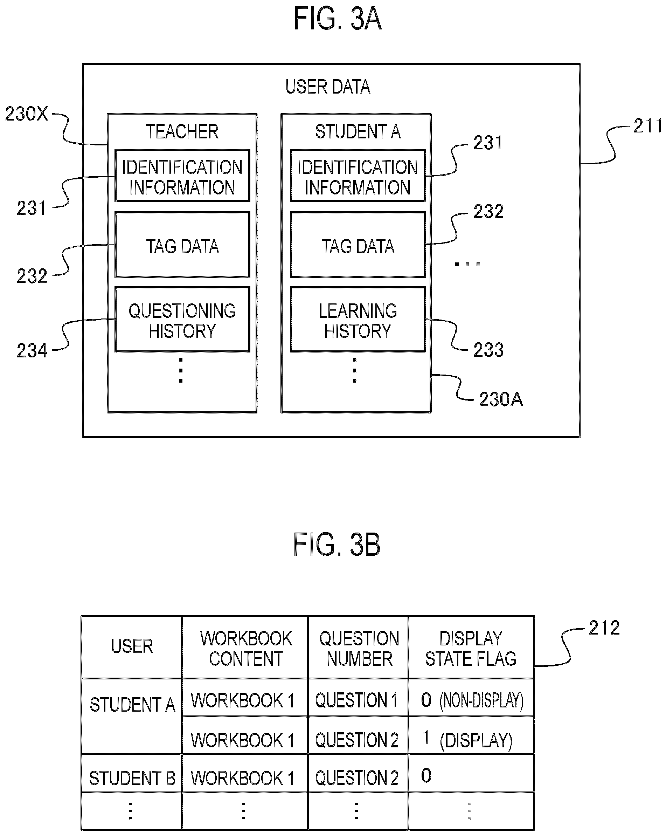

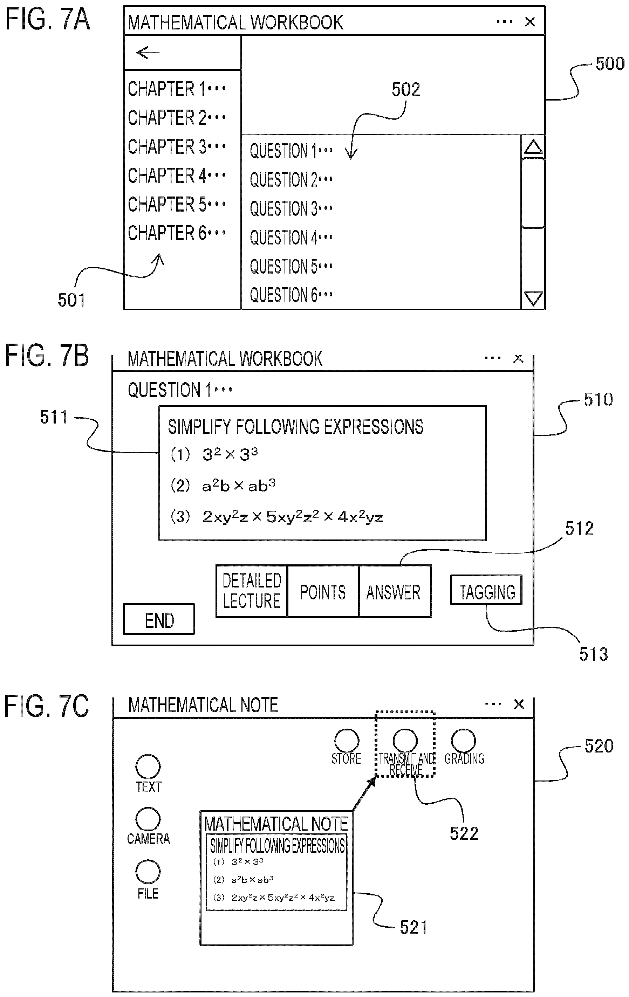

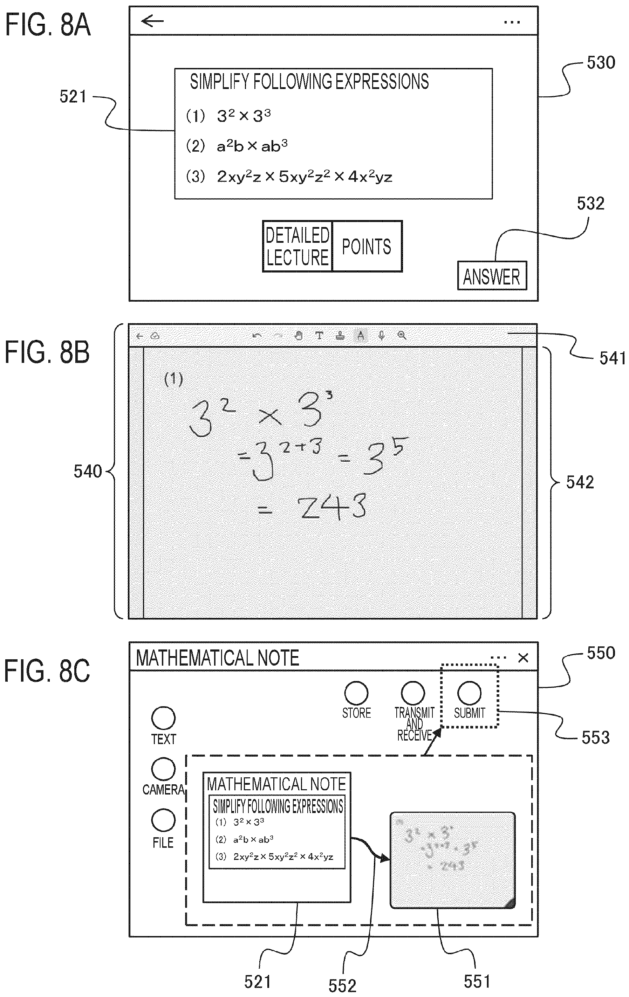

The storage unit 201 includes a content storage area 210 where learning content to be provided to the user via the communication network 4 is stored, a user data storage area 211 where user data is stored, and a display state storage area where a problem label display state 212 is stored. In the content storage area 210, first content 220 that provides a note function, second content 221 that provides a mathematical tool, third content 222 that provides a workbook, dictionary content (not illustrated), and the like are stored. The note function can be a function of enabling recording of learning content, collected information, and the like using an electronic label or the like, distribution and submission of a task, and the like. The mathematical tool is a tool that provides various functions related to mathematics such as calculation, graphing, and statistical processing. The workbook is content that provides problems and correct answers to the problems. In the user data storage area 211, various types of data associated with users who can use functions of the web system 2 are stored for each user. For example, as illustrated in FIG. 3A, user data 230A of a student A includes identification information 231, label data 232, and a learning history 233. User data 230X of a teacher includes identification information 231, label data 232, a questioning history 234, and the like. The identification information 231 includes a user ID assigned to the user, a password, license information regarding use of the content, and the like. The label data 232 includes data of an electronic label produced by the user himself or herself, data of a problem label distributed from another user, and the like. The problem label display state 212 is information indicating a display state of the problem label in the user terminal 3 used by the student, and for example, as illustrated in FIG. 3B, identification information (identification information and problem number of the workbook content) of the distributed problem label and a flag indicating a display state are stored in association with each other for each student. The flag indicating the display state indicates a value "0" for non-display, and indicates a value "1" for display. The state in which the problem label is displayed can be, for example, a state in which an electronic label (problem label 521) in a state of an uneditable object as illustrated in FIG. 7C is displayed, a state in which a problem label display screen 530 with the problem label 521 opened as illustrated in FIG. 8A is displayed, and a state in which an answer input screen 540 for inputting an answer as illustrated in FIG. 8B is displayed. The state in which the problem label 521 illustrated in FIG. 7C is displayed may be regarded as non-display. The storage device that provides the function of the storage unit 201 includes a ROM and a RAM as a main storage device, and an auxiliary storage device such as an HDD. The function of the storage unit 201 may be provided by a portable recording medium such as an optical disc, a storage device including a USB terminal, or a card-type storage device. The communication unit 204 connects the web system 2 to the communication network 4 and communicates with an external device via the communication network **4.** The function of the communication unit 204 is provided by a communication device that communicates with a node (communication device) of the communication network 4 according to a known communication standard.

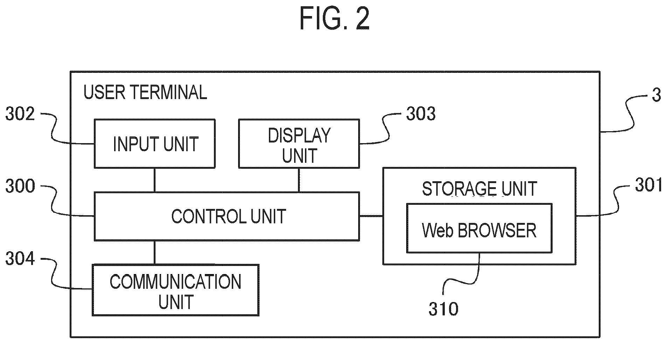

The user terminal 3 is an information processing apparatus used by a user to use a function provided by the web system 2, and includes a control unit 300, a storage unit 301, an input unit 302, a display unit 303, and a communication unit 304 as illustrated in FIG. 2. The user terminal 3 may include other functional blocks (not illustrated) such as an imaging unit, a sound collection unit, and a sound emission unit. The information processing apparatus as the user terminal 3 may be a personal computer, a smartphone, or the like having a communication function.

The control unit 300 controls the operation of the user terminal 3. For example, the control unit 300 executes a web browser to transmit an HTTP request to the web system 2, and displays and outputs a display screen corresponding to the HTTP response received from the web system 2. The control unit 300 can execute a program such as a script included in the HTTP response. The function of the control unit 300 is provided by one or more processors that execute an OS program and a program of the web browser 310 for using a note function or the like. The processor may include a CPU.

The storage unit 301 stores a program and the like of the web browser 310. A storage device that provides the function of the storage unit 301 includes a ROM and a RAM serving as a main storage device, and an auxiliary storage device such as an HDD. The function of the storage unit 301 may be provided by a portable recording medium such as an optical disc, a storage device including a USB terminal, or a card-type storage device. The input unit 302 receives an input of various types of information regarding an operation (manipulation) of the user terminal 3. The display unit 303 displays various types of information regarding an operation (manipulation) of the user terminal 3. The function of the display unit 303 is provided by a display device such as a dot matrix type liquid crystal display. The function of the input unit 302 is provided by, for example, an input device such as a position detection device (digitizer), a keyboard, and a mouse disposed to overlap a display area of the display device (display unit 303). The communication unit 304 connects the user terminal 3 to the communication network 4 and communicates with an external device via the communication network 4. A function of the communication unit 304 is provided by a communication device that communicates with a node (communication device) of the communication network 4 in conformity with a known communication standard.

A user of the user terminal 3 can execute learning using a function provided by the web system 2 by connecting the user terminal 3 to the web system 2. The user terminal 3 is connected to the web system 2 when a user ID and a password transmitted to the web system 2 are authenticated by the web system 2. A certain user (for example, a teacher) can produce a problem label distributed to another user (for example, a student) by manipulating the user terminal 3X connected to the web system 2.

### (Procedure for Producing Problem Label and Answer Label)

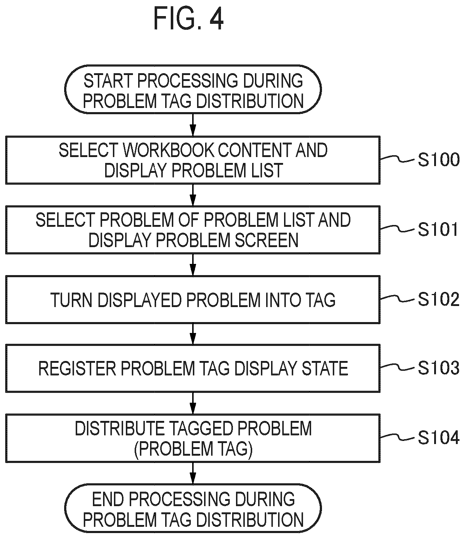

Problem labels are produced and distributed, for example, in a procedure of the flowchart illustrated in FIG. 4. A user (teacher) distributing the problem labels manipulates the user terminal 3X to select workbook content and causes the display unit 303 to display a problem list (step S100). Although not illustrated in the present flowchart because of simple determination processing, the user terminal 3X transmits a display request of the problem list of the selected workbook content to the web system 2 when detecting a user manipulation of selecting the workbook content. The web system 2 transmits screen data of the problem list to the user terminal 3X in response to the display request. The user terminal 3X displays the received screen data of the problem list on the display unit 303. The user manipulates the user terminal 3X to select a problem in the displayed problem list, and displays a problem screen on the display unit 303 (step S101). When the user manipulation of selecting the problem is detected, the user terminal 3X transmits a display request of the problem screen of the selected problem to the web system 2. The web system 2 transmits the screen data of the problem screen to the user terminal 3X in response to the display request. The user terminal 3X displays the received screen data of the problem screen on the display unit 303. Through the processing of step S100, the display unit 303 displays a problem list screen 500 including, for example, a first selection area 501 for selecting a type of problem (Chapters 1 to 6) and a second selection area 502 for selecting the problems (Question 1 to Question 6) prepared for each type selected in the first selection area 501 as illustrated in FIG. 7A. When the user selects a problem (for example, Question 1) in the problem list screen 500, the processing of step S101 is executed. For example, a problem screen 510 illustrated in FIG. 7B is displayed. The problem screen 510 includes a problem 511, a button 512 for displaying an answer (correct answer) to the problem, and a button 513 for setting the problem 511 to an electronic label.

When the user terminal 3X detects a user operation of pressing the button 513 for making an electronic label on the problem screen 510, the displayed problem 511 is labelged to generate and a problem label (step S102). The user terminal 3X transmits a labelging request to the web system 2 in response to a user manipulation of labelging the problem. The web system 2 captures the problem screen displayed in response to the labelging request to generate a problem label, and transmits screen data including the generated problem label to the user terminal 3X**.** The user terminal 3 displays the received screen data on the display unit 303. The problem label is an electronic label in which an image of a problem expressed by a character string, a mathematical expression, a figure, or any combination thereof is displayed as a base (background). Writing by layer composition of text, handwritten characters, figures, and the like, a change in a display position in a predetermined work area, and the like can be executed. When the problem label is generated, the web system 2 registers information for specifying a problem of the problem label and a flag indicating a display state of the problem label in the problem label display state 212 in association with a user (student) who is a distribution destination for the problem label (step S103). The flag indicating the display state in the information newly registered in the problem label display state 212 is set to a value "0" indicating that the problem label is not displayed.

Thereafter, when a user manipulation of distributing (transmitting) the problem label generated in the user terminal 3X is detected, the problem label is distributed (transmitted) to a predetermined user (step S104). The user terminal 3X transmits a request for distributing the problem label to the web system 2. The web system 2 stores the problem label in a storage area of the user data 230 of user in the distribution destination or in another predetermined storage area in response to the distribution request, and notifies users in the distribution destination (students A and B, or the like) that the problem label has been distributed. When the user manipulation of pressing a button 713 in the problem screen 510 exemplified in FIG. 7B is executed, for example, a note screen 520 including the problem label 521 illustrated in FIG. 7C is displayed on the display unit 303 of the user terminal 3X. An icon (object) 522 associated with a function of transmitting and receiving an electronic label including the problem label 521 to and from another user is displayed on the note screen 520. When a user (teacher) executes a manipulation of moving the problem label 521 to a position overlapping with the icon 522, the problem label 521 is distributed to another user (student).

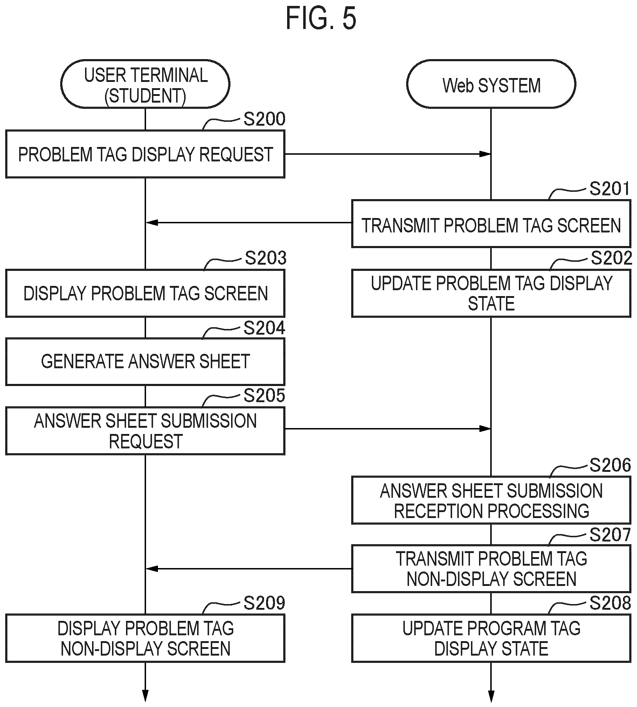

The user who has received the notification of the problem label distribution can display the distributed problem label, input (produce) an answer to the problem, and submit the answer. In the following description, in order to distinguish between the answer to the problem of the problem label input by the user and an answer (correct answer) displayed when the button 512 on the problem screen 510 illustrated in FIG. 7B is pressed, the answer to the problem of the problem label input by the user (student) is also described as an "answer sheet". The producing and submitting of the answer sheet to the problem of the problem label are executed, for example, in a procedure according to the sequence illustrated in FIG. 5. When the user manipulation of selecting the problem label is detected, the user terminals 3A and 3B of the users who produce the answer sheets transmit a problem label display request to the web system 2 (step S200). The web system 2 receiving the problem label display request generates a problem label display screen on which the problem label selected by the user is displayed and transmits the screen to the user terminals 3A and 3B (step S201), and updates the problem label display state 212 (step S202). In step S202, the web system 2 changes the flag in the display state associated with the user information included in the problem label display request and the information for specifying the problem label in the problem label display state 212 from the value "0" indicating non-display to the value "1" indicating display.

The received problem label display screen is displayed on the user terminals 3A and 3B (step S203). In step S203, for example, a problem label display screen 530 including the problem 531 and an answer button (manipulation button) 532 illustrated in FIG. 8A is displayed on the display unit 303 of each of the user terminals 3A and 3B. After the user manipulation of pressing the answer button 532 is executed, the user can manipulate the user terminals 3A and 3B to produce an answer sheet to the problem 531 (step S204). In step S204, on the display unit 303 of each of the user terminals 3A and 3B, for example, the answer input screen 540 including a tool selection unit 541 and a writing area 542 illustrated in FIG. 8B is displayed as a screen for producing an answer sheet. The user can select a method (for example, a text input using a keyboard, a handwriting input, or the like) of writing an answer in the writing area 542 from the tool selection unit 541. After the answer sheet is produced, the user can submit the produced answer sheet to the user distributing the problem label. The user terminals 3A and 3B detecting the user manipulation of submitting the answer sheets transmit an answer sheet submission request to the web system 2 (step S205). The web system 2 receiving the answer sheet submission request executes answer sheet submission processing (step S206). Thereafter, the web system 2 transmits the screen data in which the problem label is not displayed to the user terminals 3A and 3B (step S207), and updates the problem label display state 212 (step S208). In step S206, the web system 2 stores the answer sheet in a storage area of the user data 230 of a user (teacher) of a distribution source of the problem label or another predetermined storage area, and notifies the user of the distribution source that the answer sheet has been submitted. In step S207, the web system 2 generates screen data in which the problem label corresponding to the submitted answer sheet is not displayed, and transmits the screen data to the user terminals 3A and 3B**.** In step S208, the web system 2 changes a flag of the display state associated with the user information included in the answer sheet submission request and the information for specifying the problem label in the problem label display state 212 from the value "1" indicating that the flag is displayed to the value "0" indicating that the flag is not displayed.

When the producing of the answer (answer sheet) to the problem of the problem label ends, for example, a note screen 550 in which the problem label 521 and an answer label 551 are combined by an association object such as an arrow 552 illustrated in FIG. 8C can be displayed on the display unit 303 of each of the user terminals 3A and 3B. On the note screen 550, an icon (object) 553 associated with a function of submitting the problem label 521 and the answer label 551 as answer sheets is displayed. When the user executes a manipulation of moving one or both of the problem label 521 and the answer label 551 to a position overlapping with the icon 553, an answer sheet is submitted to the user who is a distribution source of the problem label, and the web system 2 receives the answer sheet. When the answer sheet is received, a screen in which the received problem label is not displayed is displayed on the user terminals 3A and 3B (step S209). In step S209, for example, a note screen in which the problem label 521, the answer label 551, and the arrow 552 are not displayed can be displayed on the display unit 303 of each of the user terminals 3A and 3B.

### (Fraud Prevention Procedure During Producing Answer Label)

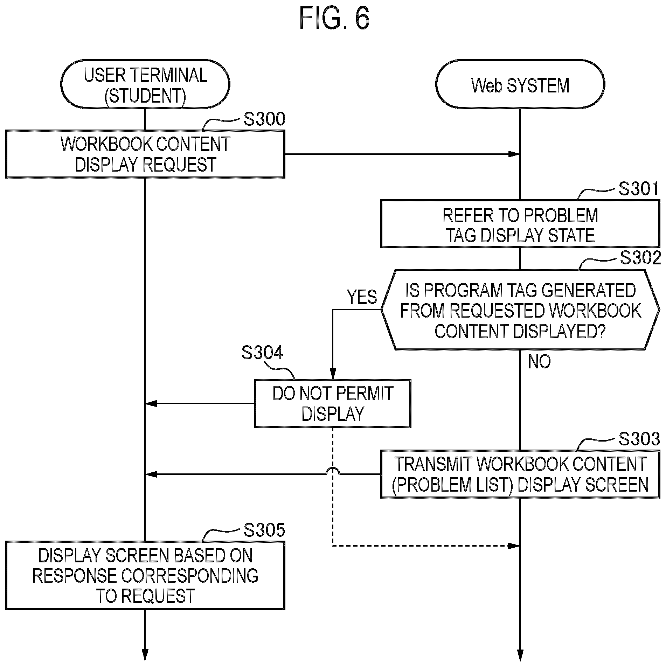

Next, processing for displaying workbook content on the display unit 303 of each of the user terminals 3A and 3B will be described. This processing is executed, for example, in a procedure that follows the sequence illustrated in FIG. 6. When a user manipulation of selecting the workbook content is detected, the user terminals 3A and 3B transmit a workbook content display request to the web system 2 (step S300). The web system 2 receiving the workbook content display request refers to the problem label display state 212 (step S301), and determines whether the problem label generated from the requested workbook content is displayed on the user terminals 3A and 3B (step S302). The web system 2 determines that the problem label is not displayed when all the flags indicating the display state of the problem label in the problem label display state 212 specified based on the user information included in the received display request and the information of the workbook content are the value of "0". When it is determined that the problem label is not displayed (NO in step S302), the web system 2 generates a problem list display screen of the requested workbook content and transmits the problem list display screen to the user terminals 3A and 3B (step S303). When it is determined that the problem label is displayed (YES in step S302), the web system 2 transmits a notification for not permitting the display of the requested workbook content (problem list) to the user terminals 3A and 3B (step S304). The user terminals 3A and 3B display the problem list display screen or a screen for notifying non-permission on the display unit 303 based on a response of the web system 2 to the workbook content display request (step S305). Accordingly, the learning system 1 can confirm the value of the flag indicating the display state of the problem label in the web system, that is, a technical state of the system depending on whether to display the problem list display screen or the screen for notifying non-permission is displayed.

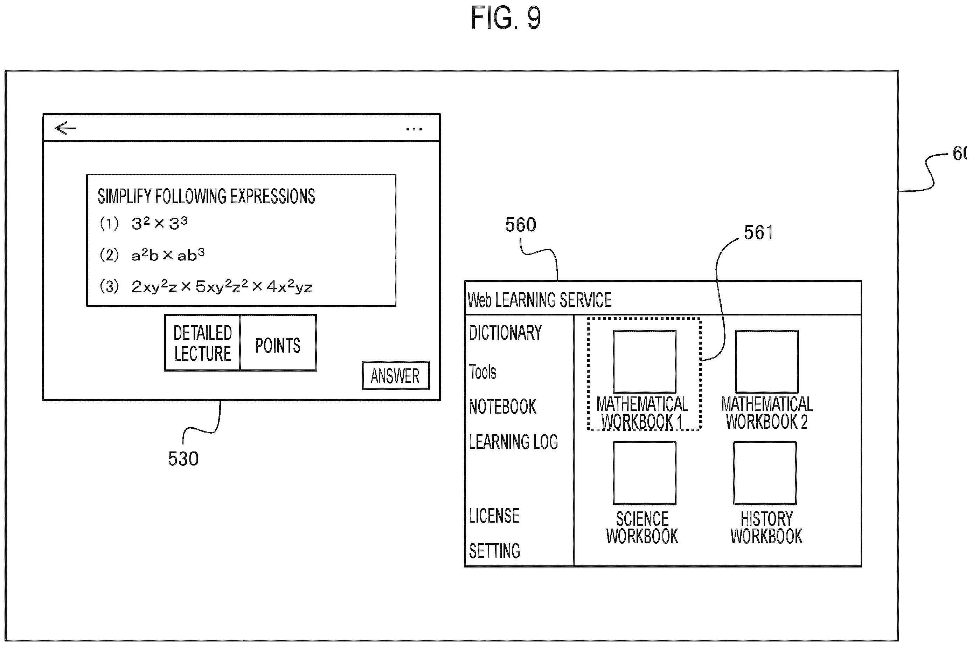

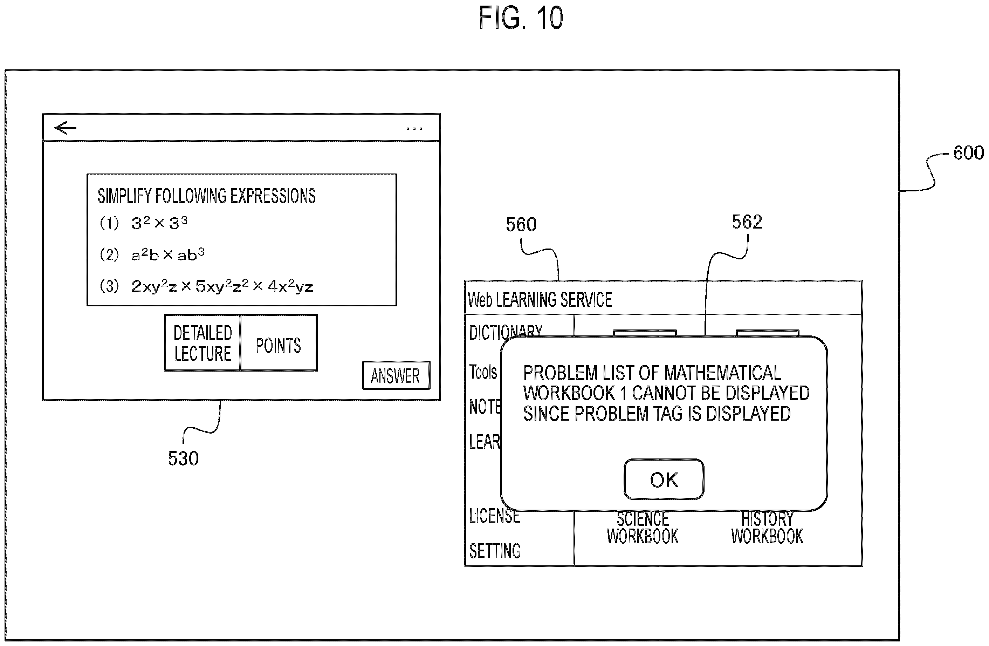

The web system 2 of the learning system 1 according to the present embodiment includes the control unit 200 that executes control such that predetermined content requested to the display unit 303 is not displayed when an electronic label (problem label 521) that functions as a manipulation button for displaying a screen for inputting a problem generated from the predetermined content and an answer to the problem on the display unit 303 of each of the user terminals 3A and 3B is displayed on the display unit 303 and a request for displaying the predetermined content is detected. Therefore, for example, when the problem on the problem label display screen 530 displayed in the display region 600 of the display unit 303 of each of the user terminals 3A and 3B is generated from a problem of workbook content 561 of "Mathematical Workbook 1" in a menu screen 560 (see FIG. 9) and the workbook content 561 is attempted to be displayed, as illustrated in FIG. 10, a message 562 for notifying that the problem list of the workbook content 561 cannot be displayed is displayed on the menu screen 560. Accordingly, in the learning system 1 according to the present embodiment, it is possible to make it difficult to execute a fraud act of producing an answer (answer sheet) to a problem while viewing a correct answer. When duplicate login is executed with a plurality of tabs in one web browser and the duplicate login is executed by two or more user terminals 3, the display control exemplified in FIG. 6 is executed and a fraud act can be prevented. Further, even when the duplicate login is executed and the problem label display screen 530 is not displayed, the problem list screen 500 (see FIG. 7A) of the workbook content can be displayed. Therefore, it is also possible to prevent a deterioration in convenience of a manipulation of a user. That is, in the learning system described in the above embodiment, through an interactive process between a user such as a teacher and a machine, it is possible to reliably support the teacher in executing a technical task (assigning a task to a student in a way that guides the student as a user to tackle the task independently).

In the above-described embodiment, an electronic label (problem label) generated from the problem of the workbook content has been described as an example. The electronic label to be subjected to the display control is not limited thereto. The electronic label may be an electronic label generated from other content (for example, textbooks, reference books, and the like) that is associated with correct answer data that can be displayed on the display unit 303 of the user terminal 3 and is intended to cause the user himself or herself to think about producing an answer. The problem of the electronic label to be distributed may be replaced with, for example, another term that encourages the user to think and produce an answer, such as a task, homework, preparation, or review.

In the display control by the control unit 200 in the above-described web system 2, for example, a submission situation of an answer sheet to the problem label may be taken into account. For example, until reception of the answer to the problem label is completed, the control unit 200 of the web system 2 may execute control such that the workbook content used to generate the problem label is not displayed on the display unit 303 of each of the user terminals 3A and 3B during display of the problem label. In other words, when the request for displaying the workbook content is made from each of the user terminals 3A and 3B of the users who has completed the reception of the answer to the problem of the problem label, the control unit 200 of the web system 2 may display the problem list of the workbook content on the display unit 303 of each of the user terminals 3A and 3B in response to the display request. When such display control is executed, the user (student) cannot see the answer (correct answer) of the workbook content during inputting of the answer. However, after completion of acceptance of the answer, for example, the correct answer (not illustrated) displayed from the problem label display screen 530 and the problem screen 510 can be displayed for review on the user terminal **3.** For example, the control unit 200 of the web system 2 may execute control such that the workbook content is not displayed when a screen for inputting an answer (answer sheet) to a problem manipulated on a problem label on which the problem generated from the workbook content is displayed is displayed on the display unit 303 of each of the user terminals 3A and 3B. Even when such display control is executed, the user (student) cannot see the answer (correct answer) of the workbook content during inputting of the answer. That is, the learning system 1 according to the above-described embodiment is only required to be able to control the display of the display unit 303 of each of the user terminals 3A and 3B so that the correct answer of the problem cannot be seen at least when the user (student) inputs an answer to the problem of the problem label generated from the workbook content. By executing such display control, it is possible to prevent a fraud act when an answer to the problem of the problem label is input. It is possible to reliably support assignment of a problem to a student in a way that can guide the student to approach the problem with his or her own power.

The processing for registering the information regarding the display control in the problem label display state 212 (step S103 of FIG. 4) is not limited to a timing at which the problem label is generated (between steps S102 and S104). The processing may be executed, for example, during distribution of the problem label (after step S104). Further, the above-described display control may be applied to all the users to whom the problem label has been distributed. For example, the display control may be applied only to some users who satisfy a specific condition such as students who have low understanding levels of the problem and students who want to overcome their weaknesses.

The above-described embodiments are specific examples to facilitate understanding of the invention, and the present disclosure is not limited to the above-described embodiments. Various modifications and changes of the information processing apparatus, the display method, and the program can be made without departing from the scope of the claims.

## Claims

1. An information processing apparatus comprising a processor, wherein
the processor does not output data for displaying predetermined content in response to detecting a request for displaying the predetermined content and in response to satisfying a first condition that a problem generated from the predetermined content is displayed on a display unit or a second condition that an answer to the problem generated from the predetermined content is not received is satisfied.

2. The information processing apparatus according to claim 1, wherein
the processor outputs data for displaying a message indicating non-permission of display of the predetermined content instead of data for displaying the predetermined content in response to satisfying the first or second condition and in response to detecting a request for displaying the predetermined content.

3. The information processing apparatus according to claim 1, wherein
the processor causes the display unit to display the problem in a state where the problem is displayed in an electronic label, and
the electronic label functions as a manipulation button for displaying a screen for inputting an answer to the problem on the display unit in response to being manipulated the electronic label.

4. The information processing apparatus according to any one of claims 1 to 3, wherein
the processor:
stores information associated with at least identification information of the problem, identification information of the predetermined content, and information indicating whether to display the problem on the display unit in a memory in advance, and
determines that the first condition is satisfied in response to detecting the request for displaying the predetermined content and in response to determining that the problem having identification information associated with the identification information of the predetermined content requested to be displayed is displayed on the display unit based on the information stored in the memory.

5. The information processing apparatus according to any one of claims 1 to 4, wherein
the processor:
stores information associated with at least identification information of the problem, identification information of the predetermined content, and reception information indicating whether to receive an answer to the problem in a memory in advance, and
determines that the second condition is satisfied in response to detecting a request for displaying the predetermined content and in response to determining that an answer to the problem having the identification information associated with the identification information of the predetermined content requested to be displayed is not received based on the information stored in the memory.

6. The information processing apparatus according to claim 4, wherein
the processor:
stores information associated with at least the identification information of the problem, the identification information of the predetermined content, information indicating whether to display the problem on the display unit, and identification information of a user producing the answer to the problem in a memory in advance, and
determines that the first condition is satisfied in response to detecting a request for displaying the predetermined content from the user and in response to determining that the problem having the identification information associated with the identification information of the predetermined content requested to be displayed is displayed on the display unit based on the information stored in the memory.

7. The information processing apparatus according to claim 5, wherein
the processor:
stores information associated with at least identification information of the problem, identification information of the predetermined content, reception information indicating whether to receive an answer to the problem, and identification information of a user producing the answer to the problem in a memory in advance, and
determines that the second condition is satisfied in response to detecting the request for displaying the predetermined content from the user and in response to determining that the answer to the problem having the identification information associated with the identification information of the predetermined content requested to be displayed is not received based on the information stored in the memory.

8. The information processing apparatus according to claim 4 or 6, wherein
the processor:
stores, in the memory, information indicating that the problem is displayed on the display unit in response to outputting data for displaying the problem on the display unit, and
outputs data for not displaying the problem on the display unit in response to receiving the answer to the problem, and stores information indicating that the problem is not displayed on the display unit in the memory.

9. A display control method executed by a computer of an information processing apparatus, wherein
the computer does not output data for displaying predetermined content in response to detecting a request for displaying the predetermined content and in response to satisfying a first condition that a problem generated from the predetermined content is displayed on a display unit or a second condition that an answer to the problem generated from the predetermined content is not received.

10. A display control system comprising:
an information processing apparatus including a processor; and
a terminal including a processor, wherein
the processor of the terminal transmits a request for displaying predetermined content to the information processing apparatus, and
the processor of the information processing apparatus does not output data for displaying predetermined content to the terminal in response to detecting the request for displaying the predetermined content from the terminal and in response to satisfying a first condition that a problem generated from the predetermined content is displayed on a display unit or a second condition that an answer to the problem generated from the predetermined content is not received.

11. A program causing a computer to execute:
a process of not outputting data for displaying predetermined content in response to detecting a request for displaying the predetermined content and in response to satisfying a first condition that a problem generated from the predetermined content is displayed on a display unit or a second condition that an answer to the problem generated from the predetermined content is not received is satisfied.
